# EUROPEAN PATENT APPLICATION

(11) **EP 4 202 476 A1**
(43) Date of publication of application: **28.06.2023**
(21) Application number: 22210425.9
(22) Date of filing: 30.11.2022
(51) Int. Cl.: G01S 7/41, B60W 30/00, G01S 13/931, G08G 1/00

(54) **ANOMALY PRIORITIZATION USING DUAL-MODE ADAPTIVE RADAR**

(30) Priority: 22.12.2021 US 202117559746
(71) Applicant: GM Cruise Holdings LLC, San Francisco, CA 94107 (US)
(72) Inventor: Karrman, Anton Mario Bongio, San Francisco (US); Tapia, Daniel Flores, San Francisco (US)
(74) Representative: Perronace, Andrea

(57) **Abstract**

Methods and apparatuses disclosed within provide a solution to problems associated with sensing apparatus of an automated vehicle (AV) not being able to adequately evaluate risks associated with objects that are not characteristic with a given driving environment. A sensing apparatus tuned to drive at quickly down highway may not adequately identify risks associated with pedestrians walking along that highway. A solution to this problem involves configuring a sensing apparatus to operate in two different modes, for example, a highway mode and a pedestrian mode at virtually the same time. This may include allocating a first percentage of processing resources to a highway mode and allocating a second percentage of processing resources to a pedestrian mode. When objects along the highway are consistent with a pedestrian, additional processing resources of the sensing apparatus may be allocated to the pedestrian mode to reduce a risk of impacting the pedestrian.

## Description

### BACKGROUND

### 1. Technical Field

The present disclosure is generally related to evaluating data from different modes of a sensing apparatus. More specifically, the present disclosure is directed to solutions that mitigate limitations of particular modes of operation of a sensing apparatus.

### 2. Introduction

Autonomous vehicles (AVs) are vehicles having computers and control systems that perform driving and navigation tasks that are conventionally performed by a human driver. As AV technologies continue to advance, they will be increasingly used to improve transportation efficiency and safety. As such, AVs will need to perform many of the functions that are conventionally performed by human drivers, such as performing navigation and routing tasks necessary to provide a safe and efficient transportation. Such tasks may require the collection and processing of large quantities of data using various sensor types, including but not limited to cameras and/or Light Detection and Ranging (LiDAR) sensors, and radar elements disposed on the AV.

### BRIEF DESCRIPTION OF THE DRAWINGS

Certain features of the subject technology are set forth in the appended claims. However, the accompanying drawings, which are included to provide further understanding, illustrate disclosed aspects and together with the description serve to explain the principles of the subject technology. In the drawings:
FIG. 1 illustrates an example of a system for managing one or more Autonomous Vehicles (AVs) in accordance with some aspects of the present technology.
FIG. 2 illustrates a series of steps that may be performed at a sensing apparatus of an automated vehicle (AV).
FIG. 3 illustrates another series of steps that may be performed at a sensing apparatus of an automated vehicle (AV).
FIG. 4 illustrates sets of program code that include instructions associated with two different operating modes of a sensing apparatus and illustrates parameters & data that may be accessed by processing resources when those instructions are accessed.
FIG. 5 shows an example of a computing system that may be used to implement at least some of the functions reviewed in the present disclosure in accordance with some aspects of the present technology.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a more thorough understanding of the subject technology. However, it will be clear and apparent that the subject technology is not limited to the specific details set forth herein and may be practiced without these details. In some instances, structures and components are shown in block diagram form in order to avoid obscuring the concepts of the subject technology.

As described herein, one aspect of the present technology is the gathering and use of data available from various sources to improve quality and experience. The present disclosure contemplates that in some instances, this gathered data may include personal information. The present disclosure contemplates that the entities involved with such personal information respect and value privacy policies and practices.

Radar sensors, such as those used in autonomous vehicle (AV) applications commonly support different operating modes that are tailored to specific operating environments. For example, an operational mode of a radar apparatus operating at an AV that is driving down a multi-lane divided highway may be tailored to use a field of view capable of detecting objects that are farther away from the AV when the AV is traveling at high speeds as compared to another operational mode of the sensing apparatus. Modes of a sensing apparatus tailored to identify pedestrians when the AV travels in a residential or city environment typically focus on objects closer to the AV when the AV is traveling at relatively slower speeds.

Yet other operational modes of the AV sensing apparatus may be tuned to identify intersections or areas where cross-traffic may be encountered along a roadway. In such instances, an environment where the AV is located may not be a divided highway, yet may still be a roadway where the AV drives at speeds that are comparable to highway speeds (e.g. 45 to 55 miles per hour). An example of such a roadway is a non-divided highway that may have one or two lanes in each direction. An operational mode associated with such a non-divided highway may focus on objects and perform evaluations using settings or parameters that are somewhere between parameters used in a non-divided highway environment and a city or residential environment.

A problem associated with a sensing apparatus at an AV relates to the fact that a particular operational mode of the sensing apparatus may not adequately identify objects that are not expected to be encountered in that particular environment. For example, a mode of a sensing apparatus tailored to a multi-lane divided highway may not adequately assess risks associated with a pedestrian walking in or next to lanes of the multi-lane divided highway. A pedestrian walking on or near such a highway is an anomaly that is not typical of objects encountered in the multi-lane divided highway environment. Additionally, sensing apparatus of an AV that is driving down the multi-lane divided highway will typically use settings and parameters that are not well-suited to evaluating the presence of the pedestrian that is walking in or near lanes of the multi-lane divided highway. This could result in the sensing system not properly avoiding pedestrians when the multi-lane divided highway operational mode of the sensing apparatus is active. What is needed are new methods and an apparatus that can account for anomalous objects when they appear in an environment that typically does not include such objects. Other types of objects that may be considered anomalous include a vehicle driving at highway speeds in a residential area, cross-traffic encountered when a multi-lane divided highway mode of a sensing apparatus is active, or other slow or non-moving objects (e.g. animals, debris, or stopped traffic) located on a highway.

Methods and apparatuses disclosed within provide a solution to problems associated with sensing apparatus of an automated vehicle (AV) not being able to adequately evaluate risks associated with objects that are not characteristic with a given driving environment. A sensing apparatus tuned to drive quickly on a highway may not adequately identify risks associated with pedestrians walking along that highway. A solution to this problem involves configuring a sensing apparatus to operate in two different modes, for example, a highway mode and a pedestrian mode at virtually the same time. This may include allocating a first percentage of processing resources to a highway mode and allocating a second percentage of processing resources to a pedestrian mode. When objects along the highway are consistent with a pedestrian, additional processing resources of the sensing apparatus may be allocated to the pedestrian mode to reduce a risk of impacting the pedestrian.

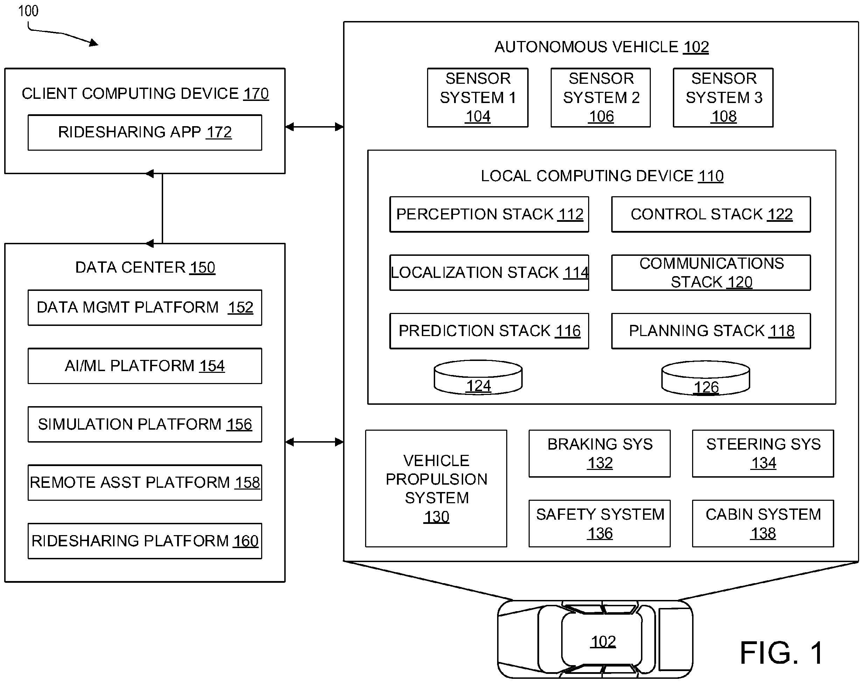

FIG. 1 illustrates an example of an AV management system 100. One of ordinary skill in the art will understand that, for the AV management system 100 and any system discussed in the present disclosure, there can be additional or fewer components in similar or alternative configurations. The illustrations and examples provided in the present disclosure are for conciseness and clarity. Other embodiments may include different numbers and/or types of elements, but one of ordinary skill the art will appreciate that such variations do not depart from the scope of the present disclosure.

In this example, the AV management system 100 includes an AV 102, a data center 150, and a client computing device 170. The AV 102, the data center 150, and the client computing device 170 can communicate with one another over one or more networks (not shown), such as a public network (e.g., the Internet, an Infrastructure as a Service (IaaS) network, a Platform as a Service (PaaS) network, a Software as a Service (SaaS) network, other Cloud Service Provider (CSP) network, etc.), a private network (e.g., a Local Area Network (LAN), a private cloud, a Virtual Private Network (VPN), etc.), and/or a hybrid network (e.g., a multi-cloud or hybrid cloud network, etc.).

The AV 102 can navigate roadways without a human driver based on sensor signals generated by multiple sensor systems 104, 106, and 108. The sensor systems 104-108 can include different types of sensors and can be arranged about the AV 102. For instance, the sensor systems 104-108 can comprise Inertial Measurement Units (IMUs), cameras (e.g., still image cameras, video cameras, etc.), light sensors (e.g., LIDAR systems, ambient light sensors, infrared sensors, etc.), RADAR systems, GPS receivers, audio sensors (e.g., microphones, Sound Navigation and Ranging (SONAR) systems, ultrasonic sensors, etc.), engine sensors, speedometers, tachometers, odometers, altimeters, tilt sensors, impact sensors, airbag sensors, seat occupancy sensors, open/closed door sensors, tire pressure sensors, rain sensors, and so forth. For example, the sensor system 104 can be a camera system, the sensor system 106 can be a LIDAR system, and the sensor system 108 can be a RADAR system. Other embodiments may include any other number and type of sensors.

The AV 102 can also include several mechanical systems that can be used to maneuver or operate the AV 102. For instance, the mechanical systems can include a vehicle propulsion system 130, a braking system 132, a steering system 134, a safety system 136, and a cabin system 138, among other systems. The vehicle propulsion system 130 can include an electric motor, an internal combustion engine, or both. The braking system 132 can include an engine brake, brake pads, actuators, and/or any other suitable componentry configured to assist in decelerating the AV 102. The steering system 134 can include suitable componentry configured to control the direction of movement of the AV 102 during navigation. The safety system 136 can include lights and signal indicators, a parking brake, airbags, and so forth. The cabin system 138 can include cabin temperature control systems, in-cabin entertainment systems, and so forth. In some embodiments, the AV 102 might not include human driver actuators (e.g., steering wheel, handbrake, foot brake pedal, foot accelerator pedal, turn signal lever, window wipers, etc.) for controlling the AV 102. Instead, the cabin system 138 can include one or more client interfaces (e.g., Graphical User Interfaces (GUIs), Voice User Interfaces (VUIs), etc.) for controlling certain aspects of the mechanical systems 130-138.

The AV 102 can additionally include a local computing device 110 that is in communication with the sensor systems 104-108, the mechanical systems 130-138, the data center 150, and the client computing device 170, among other systems. The local computing device 110 can include one or more processors and memory, including instructions that can be executed by the one or more processors. The instructions can make up one or more software stacks or components responsible for controlling the AV 102; communicating with the data center 150, the client computing device 170, and other systems; receiving inputs from riders, passengers, and other entities within the AV's environment; logging metrics collected by the sensor systems 104-108; and so forth. In this example, the local computing device 110 includes a perception stack 112, a mapping and localization stack 114, a prediction stack 116, a planning stack 118, a communications stack 120, a control stack 122, an AV operational database 124, and an HD geospatial database 126, among other stacks and systems.

The perception stack 112 can enable the AV 102 to "see" (e.g., via cameras, LIDAR sensors, infrared sensors, etc.), "hear" (e.g., via microphones, ultrasonic sensors, RADAR, etc.), and "feel" (e.g., pressure sensors, force sensors, impact sensors, etc.) its environment using information from the sensor systems 104-108, the mapping and localization stack 114, the HD geospatial database 126, other components of the AV, and other data sources (e.g., the data center 150, the client computing device 170, third party data sources, etc.). The perception stack 112 can detect and classify objects and determine their current locations, speeds, directions, and the like. In addition, the perception stack 112 can determine the free space around the AV 102 (e.g., to maintain a safe distance from other objects, change lanes, park the AV, etc.). The perception stack 112 can also identify environmental uncertainties, such as where to look for moving objects, flag areas that may be obscured or blocked from view, and so forth. In some embodiments, an output of the prediction stack can be a bounding area around a perceived object that can be associated with a semantic label that identifies the type of object that is within the bounding area, the kinematic of the object (information about its movement), a tracked path of the object, and a description of the pose of the object (its orientation or heading, etc.).

The mapping and localization stack 114 can determine the AV's position and orientation (pose) using different methods from multiple systems (e.g., GPS, IMUs, cameras, LIDAR, RADAR, ultrasonic sensors, the HD geospatial database 122, etc.). For example, in some embodiments, the AV 102 can compare sensor data captured in real-time by the sensor systems 104-108 to data in the HD geospatial database 126 to determine its precise (e.g., accurate to the order of a few centimeters or less) position and orientation. The AV 102 can focus its search based on sensor data from one or more first sensor systems (e.g., GPS) by matching sensor data from one or more second sensor systems (e.g., LIDAR). If the mapping and localization information from one system is unavailable, the AV 102 can use mapping and localization information from a redundant system and/or from remote data sources.

The prediction stack 116 can receive information from the localization stack 114 and objects identified by the perception stack 112 and predict a future path for the objects. In some embodiments, the prediction stack 116 can output several likely paths that an object is predicted to take along with a probability associated with each path. For each predicted path, the prediction stack 116 can also output a range of points along the path corresponding to a predicted location of the object along the path at future time intervals along with an expected error value for each of the points that indicates a probabilistic deviation from that point.

The planning stack 118 can determine how to maneuver or operate the AV 102 safely and efficiently in its environment. For example, the planning stack 116 can receive the location, speed, and direction of the AV 102, geospatial data, data regarding objects sharing the road with the AV 102 (e.g., pedestrians, bicycles, vehicles, ambulances, buses, cable cars, trains, traffic lights, lanes, road markings, etc.) or certain events occurring during a trip (e.g., emergency vehicle blaring a siren, intersections, occluded areas, street closures for construction or street repairs, double-parked cars, etc.), traffic rules and other safety standards or practices for the road, user input, and other relevant data for directing the AV 102 from one point to another and outputs from the perception stack 112, localization stack 114, and prediction stack 116. The planning stack 118 can determine multiple sets of one or more mechanical operations that the AV 102 can perform (e.g., go straight at a specified rate of acceleration, including maintaining the same speed or decelerating; turn on the left blinker, decelerate if the AV is above a threshold range for turning, and turn left; turn on the right blinker, accelerate if the AV is stopped or below the threshold range for turning, and turn right; decelerate until completely stopped and reverse; etc.), and select the best one to meet changing road conditions and events. If something unexpected happens, the planning stack 118 can select from multiple backup plans to carry out. For example, while preparing to change lanes to turn right at an intersection, another vehicle may aggressively cut into the destination lane, making the lane change unsafe. The planning stack 118 could have already determined an alternative plan for such an event. Upon its occurrence, it could help direct the AV 102 to go around the block instead of blocking a current lane while waiting for an opening to change lanes.

The control stack 122 can manage the operation of the vehicle propulsion system 130, the braking system 132, the steering system 134, the safety system 136, and the cabin system 138. The control stack 122 can receive sensor signals from the sensor systems 104-108 as well as communicate with other stacks or components of the local computing device 110 or a remote system (e.g., the data center 150) to effectuate operation of the AV 102. For example, the control stack 122 can implement the final path or actions from the multiple paths or actions provided by the planning stack 118. This can involve turning the routes and decisions from the planning stack 118 into commands for the actuators that control the AV's steering, throttle, brake, and drive unit.

The communication stack 120 can transmit and receive signals between the various stacks and other components of the AV 102 and between the AV 102, the data center 150, the client computing device 170, and other remote systems. The communication stack 120 can enable the local computing device 110 to exchange information remotely over a network, such as through an antenna array or interface that can provide a metropolitan WIFI network connection, a mobile or cellular network connection (e.g., Third Generation (3G), Fourth Generation (4G), Long-Term Evolution (LTE), 5th Generation (5G), etc.), and/or other wireless network connection (e.g., License Assisted Access (LAA), Citizens Broadband Radio Service (CBRS), MULTEFIRE, etc.). The communication stack 120 can also facilitate the local exchange of information, such as through a wired connection (e.g., a user's mobile computing device docked in an in-car docking station or connected via Universal Serial Bus (USB), etc.) or a local wireless connection (e.g., Wireless Local Area Network (WLAN), Bluetooth^{®}, infrared, etc.).

The HD geospatial database 126 can store HD maps and related data of the streets upon which the AV 102 travels. In some embodiments, the HD maps and related data can comprise multiple layers, such as an areas layer, a lanes and boundaries layer, an intersections layer, a traffic controls layer, and so forth. The areas layer can include geospatial information indicating geographic areas that are drivable (e.g., roads, parking areas, shoulders, etc.) or not drivable (e.g., medians, sidewalks, buildings, etc.), drivable areas that constitute links or connections (e.g., drivable areas that form the same road) versus intersections (e.g., drivable areas where two or more roads intersect), and so on. The lanes and boundaries layer can include geospatial information of road lanes (e.g., lane centerline, lane boundaries, type of lane boundaries, etc.) and related attributes (e.g., direction of travel, speed limit, lane type, etc.). The lanes and boundaries layer can also include 3D attributes related to lanes (e.g., slope, elevation, curvature, etc.). The intersections layer can include geospatial information of intersections (e.g., crosswalks, stop lines, turning lane centerlines and/or boundaries, etc.) and related attributes (e.g., permissive, protected/permissive, or protected only left turn lanes; legal or illegal u-turn lanes; permissive or protected only right turn lanes; etc.). The traffic controls lane can include geospatial information of traffic signal lights, traffic signs, and other road objects and related attributes.

The AV operational database 124 can store raw AV data generated by the sensor systems 104-108, stacks 112 - 122, and other components of the AV 102 and/or data received by the AV 102 from remote systems (e.g., the data center 150, the client computing device 170, etc.). In some embodiments, the raw AV data can include HD LIDAR point cloud data, image data, RADAR data, GPS data, and other sensor data that the data center 150 can use for creating or updating AV geospatial data or for creating simulations of situations encountered by AV 102 for future testing or training of various machine learning algorithms that are incorporated in the local computing device 110.

The data center 150 can be a private cloud (e.g., an enterprise network, a co-location provider network, etc.), a public cloud (e.g., an Infrastructure as a Service (IaaS) network, a Platform as a Service (PaaS) network, a Software as a Service (SaaS) network, or other Cloud Service Provider (CSP) network), a hybrid cloud, a multi-cloud, and so forth. The data center 150 can include one or more computing devices remote to the local computing device 110 for managing a fleet of AVs and AV-related services. For example, in addition to managing the AV 102, the data center 150 may also support a ridesharing service, a delivery service, a remote/roadside assistance service, street services (e.g., street mapping, street patrol, street cleaning, street metering, parking reservation, etc.), and the like.

The data center 150 can send and receive various signals to and from the AV 102 and the client computing device 170. These signals can include sensor data captured by the sensor systems 104-108, roadside assistance requests, software updates, ridesharing pick-up and dropoff instructions, and so forth. In this example, the data center 150 includes a data management platform 152, an Artificial Intelligence/Machine Learning (AI/ML) platform 154, a simulation platform 156, a remote assistance platform 158, and a ridesharing platform 160, among other systems.

The data management platform 152 can be a "big data" system capable of receiving and transmitting data at high velocities (e.g., near real-time or real-time), processing a large variety of data and storing large volumes of data (e.g., terabytes, petabytes, or more of data). The varieties of data can include data having different structured (e.g., structured, semistructured, unstructured, etc.), data of different types (e.g., sensor data, mechanical system data, ridesharing service, map data, audio, video, etc.), data associated with different types of data stores (e.g., relational databases, key-value stores, document databases, graph databases, column-family databases, data analytic stores, search engine databases, time series databases, object stores, file systems, etc.), data originating from different sources (e.g., AVs, enterprise systems, social networks, etc.), data having different rates of change (e.g., batch, streaming, etc.), or data having other heterogeneous characteristics. The various platforms and systems of the data center 150 can access data stored by the data management platform 152 to provide their respective services.

The AI/ML platform 154 can provide the infrastructure for training and evaluating machine learning algorithms for operating the AV 102, the simulation platform 156, the remote assistance platform 158, the ridesharing platform 160, the cartography platform 162, and other platforms and systems. Using the AI/ML platform 154, data scientists can prepare data sets from the data management platform 152; select, design, and train machine learning models; evaluate, refine, and deploy the models; maintain, monitor, and retrain the models; and so on.

The simulation platform 156 can enable testing and validation of the algorithms, machine learning models, neural networks, and other development efforts for the AV 102, the remote assistance platform 158, the ridesharing platform 160, the cartography platform 162, and other platforms and systems. The simulation platform 156 can replicate a variety of driving environments and/or reproduce real-world scenarios from data captured by the AV 102, including rendering geospatial information and road infrastructure (e.g., streets, lanes, crosswalks, traffic lights, stop signs, etc.) obtained from the cartography platform 162; modeling the behavior of other vehicles, bicycles, pedestrians, and other dynamic elements; simulating inclement weather conditions, different traffic scenarios; and so on.

The remote assistance platform 158 can generate and transmit instructions regarding the operation of the AV 102. For example, in response to an output of the AI/ML platform 154 or other system of the data center 150, the remote assistance platform 158 can prepare instructions for one or more stacks or other components of the AV 102.

The ridesharing platform 160 can interact with a customer of a ridesharing service via a ridesharing application 172 executing on the client computing device 170. The client computing device 170 can be any type of computing system, including a server, desktop computer, laptop, tablet, smartphone, smart wearable device (e.g., smartwatch, smart eyeglasses or other Head-Mounted Display (HMD), smart ear pods, or other smart in-ear, onear, or over-ear device, etc.), gaming system, or other general purpose computing device for accessing the ridesharing application 172. The client computing device 170 can be a customer's mobile computing device or a computing device integrated with the AV 102 (e.g., the local computing device 110). The ridesharing platform 160 can receive requests to pick up or drop off from the ridesharing application 172 and dispatch the AV 102 for the trip.

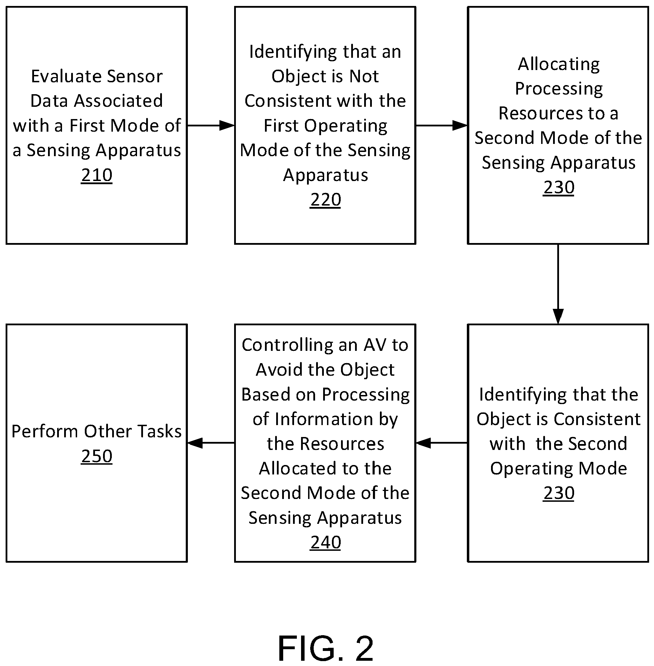

FIG. 2 illustrates a series of steps that may be performed at a sensing apparatus of an automated vehicle (AV). The steps of FIG. 2 may be performed by a processor executing instructions out of a memory at the sensing apparatus of the AV. Step 210 is a step where sensor data associated with a first mode of the sensing apparatus is evaluated. This sensor data may be data associated with received radar signals. In operation, the sensing apparatus may transmit a set of radar signals and that sensing apparatus may receive radar signals after the transmitted radar signals have been reflected off objects located in a field of view of the radar apparatus.

Dynamics of high-speed driving along a multi-lane divided highway are different from dynamics of lower-speed driving in a residential or city environment. When driving on a multi-lane divided highway, a vehicle is not likely to encounter cross traffic or objects moving directly into the path of the vehicle. Even if another vehicle were to move into the path of a primary vehicle, that other vehicle will likely be moving at a speed that is close to the speed of the primary vehicle. These dynamics mean that a controller of an AV of the primary vehicle must focus on more distant objects when traveling at high speeds along the multi-lane divided highway to prevent the AV from approaching a distant object before the controller of the AV can react to the presence of the object. Here, the controller of the AV may be likely to ignore closer objects because those closer objects are unlikely to move into the path of the AV.

In residential or city environments, an AV must drive at slower speeds to account for potential movements of relatively close objects. This is because in residential or city environments, an AV is much more likely to encounter pedestrians, bicycles, or animals that may move unexpectedly in front of the AV. Simply put, residential and city environments have a much higher probability of objects moving into the path of the AV because objects in residential and city environments are very likely to move in a direction perpendicular to the AV than in an environment of a multi-lane divided highway.

Next in step 220, an object that is not consistent with the first operating mode of the sensing apparatus is identified. This object may be considered an anomalous object or an object that is not considered normal for a given environment. For example, a pedestrian walking near or in lanes of a multi-lane divided highway is an anomaly because people are not supposed to walk at such locations. This pedestrian represents a high risk because the pedestrian may move into the path of the AV at any moment unexpectedly. In another example, a vehicle driving at a highway speed in a residential area is anomalous because vehicles are not supposed to drive at highway speeds in residential areas.

Once an object not consistent with the first operating mode of the sensing apparatus (an anomalous object) is identified in step 220, processing resources associated with a second operating mode of the sensing apparatus may be allocated in step 230. In the instance when the first operational mode of the sensing apparatus corresponds to driving along a multi-lane highway and the anomalous object identified in step 220 may be a pedestrian, the second mode of operation of the sensing apparatus may correspond to a mode that is tailored to monitoring motion of a pedestrian. Here, this second mode may focus on objects that are closer to the AV by selecting radar frequency signals or signal shapes better suited for detecting details of a pedestrian. Step 230 may include increasing a percentage of processing resources to dedicated to the second mode of operation while reducing a percentage of processing resources dedicated to the first mode of operation. For example, initially the first mode of operation may be allocated 90% of processing resources and the second mode may be allocated 10% of those processing resources. Step 230 of FIG. 2 may adjust the processing resources such that 70% of the processing resources are dedicated to the first operational mode and that 30% of the processing resources are dedicated to the second operational mode.

Next in step 230, the object may be identified as being consistent with the second operating mode because the object appears to be the pedestrian, for example. This may allow the AV to safely avoid the object based on processing information/data associated with the second mode of operation. Here, a controller of the AV may apply brakes of the AV or may control the AV by changing lanes. After step 240, other tasks may be performed in step 250. These other tasks may include re-allocating percentages of processing tasks back to the original 90% allocation for the first mode of operation and 10% to the second mode of operation.

In an instance, when the first mode of operation corresponds to a pedestrian mode based on the AV driving in a residential area, the AV may be controlled to pull over and stop along the edge of a road when another vehicle is detected to be driving at highway speeds along the residential roadway. In such and instance, the second mode may correspond to an avoidance mode.

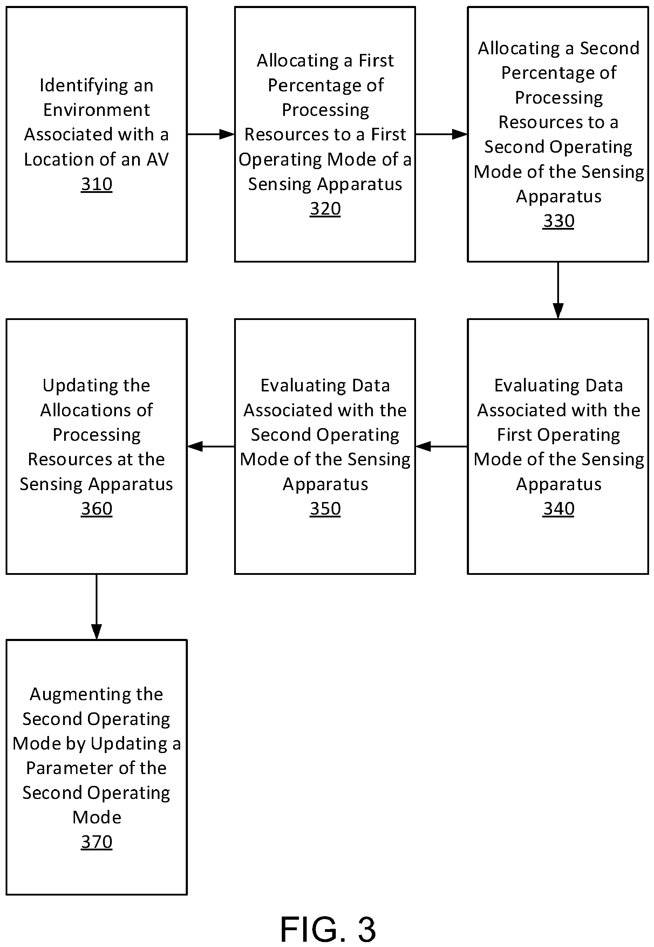

FIG. 3 illustrates another series of steps that may be performed at a sensing apparatus of an automated vehicle (AV). Some of the steps of FIG. 3 may be performed by a processor that executes instructions out of a memory at the sensing apparatus. FIG. 3 begins with step 310 where an environment where an AV is located may be identified. This identification may be performed by a processor that evaluates one or more of radar sensor data, camera sensor data, or data associated with a light detection and ranging (LiDAR) apparatus at the AV. An environment of a multi-lane divided highway may be identified based on identifying that the AV is driving along a roadway that include multiple lanes where traffic moves in a single direction. This identification may also be based on identifying that the roadway includes a center diving strip (an area that includes dirt, grass, or plants) or a center divider (e.g. a structure that physically prevents vehicles from crossing a zone next to the roadway). A residential roadway may be identified from sensor data based on the presence of structures, sidewalks, vehicles parked along the roadway, and/or based on data received from a global positioning system (GPS).

Once a particular type of driving environment is identified in step 310, a mode associated with that type of environment may be initiated at the sensing apparatus and then a first percentage of processing resources may be allocated to process data associated with the first operating mode of the sensing apparatus in step 320 of FIG. 3. For example, when the environment where the AV is located corresponds to a multi-lane divided highway, 90% of available processing resources of a sensing apparatus may be directed to collecting or evaluating sensor data best suited for that environment. Next in step 330, a second percentage of processing resources to a second operating mode of the sensing apparatus. This could include allocating 10% of processing resources to processing tasks associated with the second operating mode of the sensing apparatus.

Percentages of processing resources may be associated with an amount of time and /or a number of computational processing cycles of a processor per unit time. These percentages may also be associated with numbers of computations that occur in parallel at a sensing apparatus. For example, when a sensing apparatus includes multiple processors, one set processors may be allocated to processing tasks associated with longer ranges and higher speeds where another set of processors may be allocated to perform processing tasks associated with detecting pedestrians. Regardless of whether a sensing apparatus includes one or multiple processors, numbers of processing tasks per unit time or processing times may be changed when anomalies associated with one operational mode are detected by the sensing apparatus.

Percentages of resources at the sensing apparatus allocated by a processor may also include changing allocated hardware resources associated with particular operating modes of the sensing apparatus. For example, a number of transmitted radar signals per unit time for a given operational mode of a radar apparatus. This may include increasing a number of radar signals per unit time associated with the second operational mode and may also include decreasing a number of radar signals per unit time that are associated with the first operational mode. This means that resources associated with processing components and/or with analog components at the radar apparatus may be changed when anomalies are detected in an environment around an AV sensing apparatus. Other factors that may be changed include increasing or decreasing amounts of transmitted power, a number of activated transmission elements (e.g. radar antennas), or faster scan rates (i.e. more frequently scanning an area). Other resources that may be allocated include amounts of memory and types of memory that are directed to particular processes. For example, a number of megabytes of main random access memory (RAM) may be increased in order to prevent a processor from having to swap data from long term non-volatile data storage to RAM such that instructions of a particular process can be executed more rapidly. In certain instances, a local memory of a processor may be loaded with instructions of a particular process such that instructions of that particular process can be executed more rapidly as compared to executing those instructions out of the main random access memory.

In order to improve the performance of the operational mode, the coherent processing interval (CPI) may be adjusted. CPI is a group of multiple pulses, usually with the same PRF and frequency, and is sampled by an analog to digital converter (ADC) so it can be used in subsequent processing. Adjustment of the CPI allows tuning of the amount of time a certain mode runs (i.e. performs a scan); this could mean using more pulses in a single scan or using a same number of pulses of greater lengths, which can significantly affect the performance and properties of the mode.

When the sensing apparatus operates in a dual mode configuration, data associated with the first operating mode of the sensing apparatus may be evaluated in step 340 and data associated with the second operating mode of the sensing apparatus may be evaluated in step 350 of FIG. 3. The evaluations performed in step 340 and/or in step 350 may identify that an object sensed by the sensing apparatus is an anomalous object. This identification may result in additional resources being allocated to analog and/or digital resources at the sensing apparatus in step 360 of FIG. 3. Here again, this may include updating percentages of processing resources at the sensing apparatus. This may include changing the percentage of processing resources allocated to the first operational mode to 70% and changing the percentage of processing resources allocated to the second operational mode to 30%. Additional evaluations may be performed on received data and this may result in percentages of processing resources allocated to the second operating mode being larger than percentages of processing resources allocated to the first operating mode.

Evaluations of sets of sensor data may result in an identification that one or more objects sensed by the sensing apparatus are consistent with a change in road or environmental conditions may result in updating of parameters of an operational mode in step 370 of FIG. 3. The processing resources allocated to the second operational mode may then execute instructions associated with one or more updated parameters of the sensing apparatus.

When an AV is driving down a multi-lane divided highway and the highway environment changes to no longer being a divided highway, roads that intersect or cross the highway may be encountered. In such an instance, a processor performing processing tasks may identify that a road intersects or crosses the highway. This may result in the execution of instructions associated with identifying intersections being executed. Objects such as cars facing in a direction perpendicular to the highway may be identified and this may result in additional processing resources being allocated to evaluate data associated with these cars. In an instance when a first operating mode corresponds to a multi-lane divided highway and a second operating mode corresponds to detecting pedestrians, small objects, or slow moving objects and when a change to a road or environmental condition is observed, processing resources of either the first or the second operating mode may slew or be augmented to force the processor to execute instructions associated with identifying objects associated with such a change. The intersection encountered on a highway and vehicles facing in a direction perpendicular to the highway are examples of such objects. In such an instance, parameters associated with detecting objects near an intersection may be executed. Such an augmentation or slewing could result in modifying how the second mode of operation operates.

Allocations of processing resources such as those discussed in step 320 and 330 of FIG. 3 may include usage of a predefined function that maps resource requirements to mode parameters. For example, when a mode of operation associated with an alternate mode is permitted 15% of all processing cycles, the aforementioned function could map the number of available processing cycles (digital and/or analog) to a set of mode parameters that are optimized for that specific number of cycles along with the original intention of the alternate mode (like its ability to detect slow moving objects when the ego vehicle is moving quickly). The function would do a similar mapping for the main mode that was allowed 85% of the cycles. These mappings thus allow the development of large offline "mode banks" (collections of mode parameters and the amount of computational resources required to execute them) for the primary and secondary modes, which simplifies the online optimization problem.

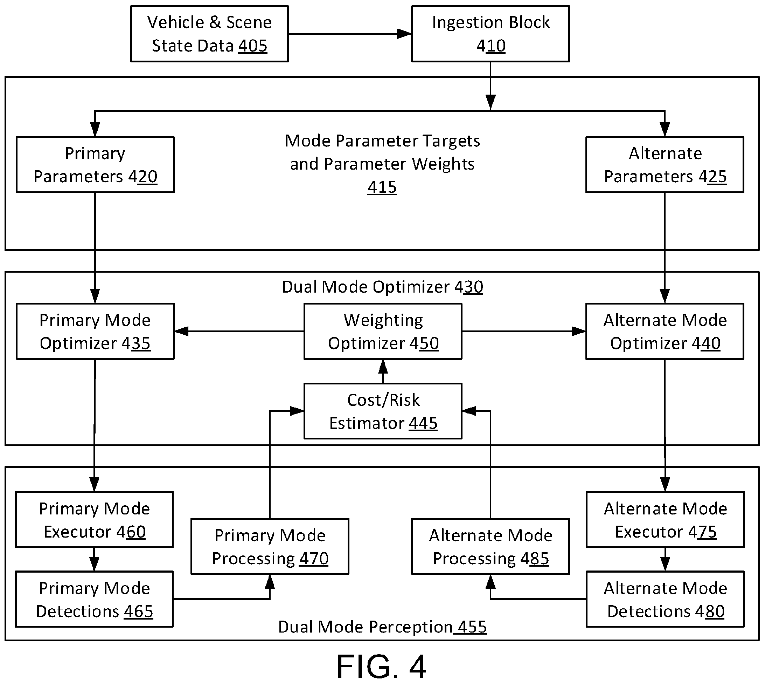

FIG. 4 illustrates sets of program code that include instructions associated with two different operating modes of a sensing apparatus and illustrates parameters & data that may be accessed by processing resources when those instructions are accessed. FIG. 4 includes vehicle and scene state data 405 that may be provided for use by a processor that executes instructions out of a memory at a sensing apparatus. This vehicle and scene state data may be stored at a memory that the processor can access. Here vehicle data may be information associated with the vehicle that may include a pose and kinematic state of the ego-vehicle, the current and/or past mode of operation of the sensing apparatus, or other information regarding operation of the AV itself. Scene state data may include data indicative of a type of roadway that the vehicle is driving along, weather around the vehicle, data regarding objects around the vehicle, or other data associated with the environment around the vehicle. Ingestion block 410 may be a software process that accesses the vehicle and state data such that data may be used by the processor.

FIG. 4 includes a first set of program code 415 relating to the identification or processing of parameter targets and parameter weights, a second set of program code 430 that includes instructions for optimizing operation of two different modes (dual mode) of operation, and includes a third set of program code that includes instructions for making perceptions relating to the dual mode operation of the sensing apparatus. Parameter targets may be parameters associated with the processing of data associated with types of objects that may be encountered along a roadway. Parameter targets that may be associated with a multi-lane divided highway may allow the sensing apparatus to identify a type of vehicle from another type of vehicle. For example, parameters may be tuned to optimally identify a distribution of radar detections that correspond to a truck where other parameters may better match distributions of points to a car. When an operational mode of a sensing apparatus is initiated, an initial set of weights may be set and as an initial set of parameter weights. These parameter weights may be used to change how data will be prioritized at the sensing apparatus as discussed below.

Instructions of the program code 415 relating to the identification or processing of parameter targets and parameter weights may cause a processor to access a set of primary parameters 420 and a set of alternate parameters. The primary parameters 420 may be parameters associated with a first mode of operation of the sensing apparatus and the alternate parameters 425 may be parameters associated with the second mode of operation of the sensing apparatus. Primary parameters 420 and alternate parameters 425 may be parameters that control types of waveforms, frequencies of radar signals, or times associated with the transmission of signals by the sensing apparatus used respectively by a first mode and a second mode of the sensing apparatus. Primary parameters 420 and alternate parameters 425 may also control percentages of processing resources respectfully allocated to the first mode and the second mode of operation of the sensing apparatus as discussed in respect to FIGS 2-3 above.

The dual mode optimizer set of program code 430 at the sensing apparatus include instructions 435 that may be used to optimize the primary mode of operation and instructions 440 that may be used to optimize the alternate mode of operation of the sensing apparatus. The dual mode optimizer set of program code 430 may also include instructions 445 for evaluating risks and/or costs with objects encountered along a roadway. Determinations may be execution of the risk and/or cost instructions 445 may allow a processor to set or change weights that in turn may change operation of a primary mode and/or an alternate mode of the sensing apparatus. When certain types of objects are detected that are associated with higher risks, weights associated with modes of operation capable of evaluating those certain types of objects may be increased such that additional processing resources can be allocated to evaluating motion of those objects. As discussed above, in an instance when a first operating mode corresponds to a multi-lane divided highway and a second operating mode corresponds to detecting pedestrians and when an object associated with a change in road or environmental conditions, processing resources of either the first or the second operating mode may slew or be augmented to force the processor to execute instructions associated with identifying such objects based on the change in road or environmental conditions. The intersection encountered on a highway and vehicles facing in a direction perpendicular to the highway are examples of such objects.

The third set of program code 455 of FIG. 4 may include instructions that allow the sensing apparatus to make determinations regarding objects encountered a roadway. This third set of program code 455 includes instructions 465 that allow a processor to optimize processing of the primary mode, instructions 465 that are used to identify objects by the primary operational mode of the sensing apparatus, and instructions 470 that allow a processor to process data collected based on operation of the primary mode at the sensing apparatus. This third set of program code 455 may also include instructions 475 that allow a processor to optimize processing of the alternate mode, instructions 480 that are used to identify objects by the alternate operational mode of the sensing apparatus, and instructions 485 that allow a processor to process data collected based on operation of the alternate mode at the sensing apparatus.

In operation, vehicle and scene state data 405 may be received by a processor executing instructions of the parameter target and parameter weights program code 415 when information relating to the vehicle and scene state data 405 are provided such that instructions of the dual mode optimizer program code 430 may execute. Data may be provided such that the processor may execute instructions of the dual mode perception program code 455 based on data received from the primary mode optimizer 460 and the alternate mode optimizer 440.

Calculations may then be performed by the processor executing instructions associated with the primary mode of operation and the alternate mode of operation based on a current share of processing resources allocated to the primary mode and to the alternate mode. Instructions of the primary mode executor 460 and the alternate mode executor 475 may be used to evaluate sensor data associated with respectively the primary mode and the alternate mode. Instructions of the primary mode detections 465 and the alternate mode detection 480 may allow the processor to evaluate and identify objects viewed by the sensing apparatus. Additional processing may then be performed based on the execution of instructions of the primary mode processing program code 470 and the alternate mode processing program code 485 that may identify objects that could be associated with a risk or cost. Risks and costs associated with objects may be evaluated by the processor executing instructions of the cost/risk estimator 445 of FIG. 4. Identified costs and risks may be provided to the processor such that the processor may update weights to associate with data of the primary mode and/or the alternate mode. These weights may be used to update the percentage of processing resources allocated to each of a primary mode of operation or a secondary mode of operation of the sensing apparatus.

In an instance when a pedestrian is identified as being on or near a lane of a multi-lane highway, a risk and cost associated with the pedestrian may result in additional processing resources being allocated to the alternate mode optimizer. Once the AV passes the pedestrian, additional vehicle and state data may be used to update primary parameters 420 and alternate parameters 425 after which processing resources of the dual mode optimizer may once again be re-allocated. The various sets of program code of FIG. 4 may comprise a feedback loop that continuously receives state data, evaluates risks and costs, changes processing allocations based on risks, costs, and weights as new state data is received and ingested into the dual mode optimizer of FIG. 4.

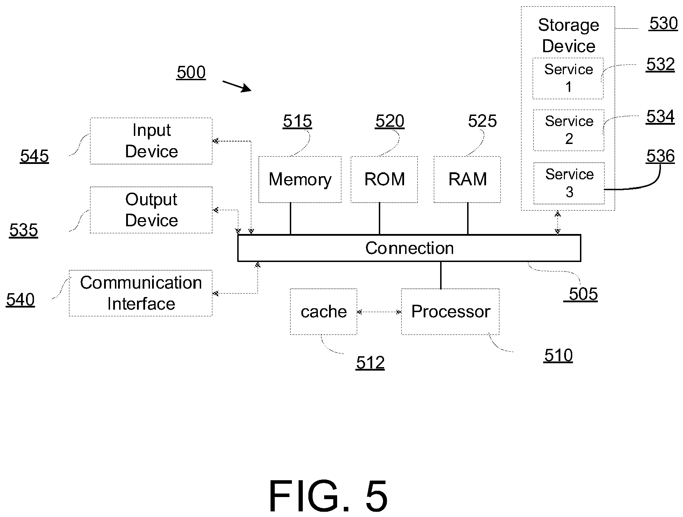

FIG. 5 shows an example of computing system 500 that may be used to implement at least some of the functions reviewed in the present disclosure. In certain instances, a computing device may be incorporated into a sensing apparatus or any component thereof in which the components of the system are in communication with each other using connection 505. Connection 505 can be a physical connection via a bus, or a direct connection into processor 510, such as in a chipset architecture. Connection 505 can also be a virtual connection, networked connection, or logical connection.

In some embodiments, computing system 500 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example system 500 includes at least one processing unit (CPU or processor) 510 and connection 505 that couples various system components including system memory 515, such as read-only memory (ROM) 520 and random access memory (RAM) 525 to processor 510. Computing system 500 can include a cache of high-speed memory 512 connected directly with, in close proximity to, or integrated as part of processor 510.

Processor 510 can include any general purpose processor and a hardware service or software service, such as services 542, 534, and 536 stored in storage device 530, configured to control processor 510 as well as a special-purpose processor where software instructions are incorporated into the actual processor design. Processor 510 may essentially be a completely self-contained computing system, containing multiple cores or processors, a bus, memory controller, cache, etc. A multi-core processor may be symmetric or asymmetric.

To enable user interaction, computing system 500 includes an input device 545, which can represent any number of input mechanisms, such as a microphone for speech, a touchsensitive screen for gesture or graphical input, keyboard, mouse, motion input, speech, etc. Computing system 500 can also include output device 535, which can be one or more of a number of output mechanisms known to those of skill in the art. In some instances, multimodal systems can enable a user to provide multiple types of input/output to communicate with computing system 500. Computing system 500 can include communications interface 540, which can generally govern and manage the user input and system output. There is no restriction on operating on any particular hardware arrangement, and therefore the basic features here may easily be substituted for improved hardware or firmware arrangements as they are developed.

Storage device 530 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 530 can include software services, servers, services, etc., that when the code that defines such software is executed by the processor 510, it causes the system to perform a function. In some embodiments, a hardware service that performs a particular function can include the software component stored in a computer-readable medium in connection with the necessary hardware components, such as processor 510, connection 505, output device 535, etc., to carry out the function.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general-purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

## Claims

1. A system comprising:
a radar antenna that receives reflected radar signals;
circuitry coupled to the radar antenna that digitizes the received radar signals to generate sensor data;
a memory; and
a processor that executes instructions out of the memory to:
associate a first set of the sensor data with a first operating mode;
evaluate the first set of the sensor data;
determine, based on the evaluation of the set of sensor data that an object represented by the first set of sensor data is not consistent with the first operating mode of;
reallocates a first portion of processing resources to process information associated with the object based on the determination that the object is not consistent with the first operating mode of the sensing apparatus; and
identify that the object is consistent with a second operating mode.

2. The system of claim 1, wherein the reallocation of the first portion of the processing resources results in additional processing resources being allocated to the second operating mode.

3. The system of claim 2, wherein the processor executes instructions out of the memory to:
allocate a first initial percentage of the processing resources to the first operating mode, and
allocate a second initial percentage of the processing resources to the second operating mode.

4. The system of claim 1, wherein the processor executes instructions out of the memory to:
evaluate received sensor data associated with the second operating mode, and
classify the object as a first type of object based on the evaluation of the received sensor data associated with the second operating mode; and
increasing a percentage of the processing resources at the sensing apparatus to process additional sensor data associated with the second operating mode based on the object being classified as the first type of object.

5. The system of claim 4, wherein the processor executes instructions out of the memory to:
update a parameter of the second operational mode to augment the second operational mode of the sensing apparatus based on a classification associated with the first type of object.

6. The system of claim 1, wherein the reallocation of the first portion of the processing resources results in a reduction of processing resources at the sensing apparatus allocated to the first operating mode.

7. The system of claim 1, wherein the sensing apparatus is located at an automated vehicle (AV) and the AV is controlled to avoid the object based at least in part of the reallocation of the first portion of the processing resources.

8. A method comprising:
evaluating sensor data associated with a first operating mode of a sensing apparatus;
determining, based on the evaluation of the sensor data, that an object represented by the sensor data is not consistent with the first operating mode of the sensing apparatus;
reallocating a first portion of processing resources of the sensing apparatus to process information associated with the object based on the determination that the object is not consistent with the first operating mode of the sensing apparatus; and
identifying that the object is consistent with a second operating mode of the sensing apparatus.

9. The method of claim 8, wherein the reallocation of the first portion of the processing resources results in additional processing resources being allocated to the second operating mode.

10. The method of claim 9, further comprising:
allocating a first initial percentage of the processing resources to the first operating mode, and
allocating a second initial percentage of the processing resources to the second operating mode.

11. The method of claim 8, further comprising:
evaluating received sensor data associated with the second operating mode, and
classifying the object as a first type of object based on the evaluation of the received sensor data associated with the second operating mode; and
increasing a percentage of the processing resources at the sensing apparatus to process additional sensor data associated with the second operating mode based on the object being classified as the first type of object.

12. The method of claim 11, further comprising:
updating a parameter of the second operational mode to augment the second operational mode of the sensing apparatus based on a classification associated with the first type of object.

13. The method of claim 7, wherein the reallocation of the first portion of processing resources results in a reduction of processing resources at the sensing apparatus allocated to the first operating mode.

14. The method of claim 1, wherein the sensing apparatus is located at an automated vehicle (AV) and the AV is controlled to avoid the object based at least in part of the reallocation of the first portion of the processing resources.

15. Computer program, **characterized in that** it comprises code means configured to, when executed on a computer, carry out the steps of the method according to any one claim 8 to 14.

16. A non-transitory computer-readable storage medium, **characterized in that** the computer program of claim 15 is stored on it.
